Europäisches Patentamt

European Patent Office

Office européen des brevets

(19)

(11) EP 1 116 960 A1

(12) EUROPEAN PATENT APPLICATION
published in accordance with Art. 158(3) EPC

(43) Date of publication:
18.07.2001 Bulletin 2001/29

(51) Int Cl.⁷: **G01S 7/285**, G01S 13/93, H03H 15/00

(21) Application number: 00946444.7

(22) Date of filing: 21.07.2000

(86) International application number:
PCT/JP00/04891

(87) International publication number:
WO 01/07930 (01.02.2001 Gazette 2001/05)

(84) Designated Contracting States:
AT BE CH CY DE DK ES FI FR GB GR IE IT LI LU
MC NL PT SE
Designated Extension States:
AL LT LV MK RO SI

(30) Priority: 22.07.1999 JP 20809899

(71) Applicant: Kabushiki Kaisha Toyota Chuo
Kenkyusho
Aichi-gun, Aichi-ken, 480-1192 (JP)

(72) Inventor: Ohshima, Shigeki,
K.K. Toyota Chuo Kenkyusho
Aichi-gun, Aichi 480-1192 (JP)

(74) Representative:
Schmidtchen, Jürgen Christian et al
Blumbach, Kramer & Partner GbR
Patentanwälte,
Radeckestrasse 43
81245 München (DE)

(54) **RADAR DEVICE**

(57) Transmission antennas (18a, 18b) are alternately switched by means of a switch (16) and are transmitted. A signal received by a reception antenna (20) is applied through a homodyne detector (24) and a comb filter (26) to a radar signal processor (10). The comb filter has a characteristic synchronized with a switching frequency of the switch (16), and removes leaked transmission waves modulated with the switching frequency. Thus, adverse effects of the leaked transmission waves modulated by switching antennas can be eliminated.

**Fig. 1**

**Description**

TECHNICAL FIELD

The present invention relates to a radar device of a continuous-wave type for successively switching reception antennas or transmission antennas in a predetermined switching cycle to implement the equivalent of multiple reception channels.

BACKGROUND ART

Holographic radar devices implementing a structure having the equivalent of multiple reception channels by rapidly switching reception antennas or transmission antennas have been known. For example, Japanese Patent Laid-Open Publication No. Sho 63-256879 discloses a radar device for transmitting radio waves from a single transmission antenna and receiving reflected waves of the transmitted waves by successively switching among a plurality of reception antennas.
Such a structure enables obtaining the equivalent of multiple reception channels using a single receiver.
In a radar device, there is always a component of transmitted waves leaking directly to a receiving section. Removing such leakage components is relatively easy when antennas are not switched because the leakage components are observed, as direct-current components when received signals are detected. However, when transmission antennas or reception antennas are switched, direct leakage components (direct-current components) are modulated in accordance with the switching. The modulated components cannot be easily removed, and aggravate the S/N ratio of the received signal because they usually have a greater amplitude than the received signal.

DISCLOSURE OF THE INVENTION

The present invention has been conceived in view of the above-described problems, and aims to provide a radar device capable of effectively preventing adverse effects of direct leakage components.
The present invention provides a radar device of a continuous wave type for successively switching reception antennas or transmission antennas in a predetermined switching cycle to implement the equivalent of multiple reception channels characterized in that a comb filter with a characteristic synchronized with the switching cycle is disposed in a path of a received signal to remove an unwanted signal leaked from a transmitting section to a receiving section.
When a direct-current component leaked from the transmitting section to the receiving section due to leakage of transmitted waves is modulated in accordance with switching of antennas, a leakage component appears at a position of frequency spectrum corresponding to an integer multiple of a switching frequency. The comb filter has a frequency characteristic generating 0 (null) at designated frequency intervals. Therefore, the leakage component can effectively be removed by matching the frequency at which the leakage component is generated and the frequency at which 0 is generated.
Preferably, said continuous wave type is a frequency modulation type, and said comb filter is of a subtraction type configuration. The comb filter of the subtraction type has a passing amplitude characteristic in the shape of 1-coskf, where k is a constant and f is a frequency. Thus, as the frequency of a signal from a target approaches 0 (direct-current), the amplitude thereof is approximately attenuated by the square of the frequency. Further, in the frequency modulation method, because the frequency of the signal from the target is proportional to the distance, the amplitude thereof is attenuated by the square of the distance in the comb filter as the distance is reduced.
The amplitude of the signal from a target is inversely proportional to the fourth power of the distance in accordance with the radar equation if the comb filter is not provided. Therefore, by disposing a comb filter, the amplitude of the signal received from a target can be made to be inversely proportional to the square of the distance, thereby reducing the dynamic range and facilitating detection of targets in a wide area.
Said comb filter of the subtraction type preferably has a first peak at a frequency corresponding to a maximum detection distance, so that a signal from a target located farther than the maximum detection distance which need not be detected can be greatly attenuated.

BRIEF DESCRIPTION OF THE DRAWINGS

Fig. 1 illustrates an overall configuration of a radar device according to an embodiment of the invention.
Fig. 2(a)-Fig. 2(d) illustrate effects of direct-current components resulting from leakage waves.
Fig. 3 illustrates a configuration of a comb filter of the subtraction type.
Fig. 4 illustrates frequency characteristics of the comb filter of the subtraction type.
Fig. 5 illustrates signal strength compression characteristics achieved by the comb filter.

Fig. 6 illustrates another configuration example of a radar device according to an embodiment of the invention.

Fig. 7 illustrates a configuration example of the comb filter.

Fig. 8 illustrates another configuration example of the comb filter.

BEST MODE FOR CARRYING OUT THE INVENTION

Preferred embodiments of the present invention (hereinafter referred to as embodiments) will next be described with reference to the drawings.

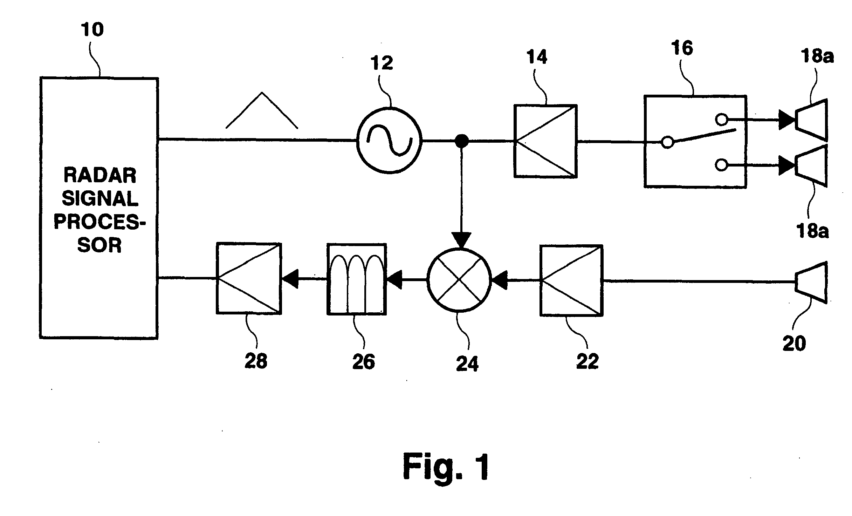

Fig. 1 is a block diagram illustrating an overall configuration of a radar device according to the present embodiment, which is an FMCW (frequency modulated continuous wave) radar device of the homodyne type in which only transmission antennas are switched.

A radar signal processor 10 is a circuit for processing a variety of signals, controlling reception and transmission, and performing signal processing to detect a target.

The radar signal processor 10 supplies triangular waves to a VCO (voltage-controlled oscillator) 12 for generating millimeter waves (MMW). The VCO 12 generates FMCW waves with the frequency modulated with the triangular waves. It should be noted that the triangular waves may be replaced with sine waves.

The FMCW waves from the VCO 12 are provided to a power amplifier (PA) 14 for transmission, and subjected to a predetermined amplifying process. An output of the transmission power amplifier 14 is supplied to a plurality of transmission antennas 18a and 18b through a switch 16. The switch 16 is switched at a high speed by a signal provided from the radar signal processor 10, and FMCW waves are transmitted alternately from the transmission antennas 18a and 18b.

Reflected waves from the target are received by a single reception antenna 20 and provided to a low-noise amplifier (LNA) 22, which amplifies and supplies the received signal to a homodyne detector (MIX) 24. The homodyne detector 24 also receives FMCW waves from the VCO 12, and mixes the FMCW waves to the received signal to perform homodyne detection and obtain the radar signal multiplexed in a time-divisional manner by operation of the switch 16. In other words, outputs produced by detecting the signals received for the waves transmitted from the transmission antennas 18a and 18b can be alternately obtained.

A comb filter 26 removes a predetermined frequency component from the output of the homodyne detector 24. An output from the comb filter 26 is amplified by a baseband amplifier (BBA) 28 and supplied to the radar signal processor 10. The radar signal processor 10 detects the relative speed and the distance to the target based on the detected output supplied thereto.

The device of the present embodiment includes the comb filter 26, which will next be described.

In this type of device, direct leakage waves of the transmitted waves are superposed on the received signal due to a mismatch with a signal transmission path of the transmission antennas 18a and 18b, leakage from the switch 16, and intercoupling between transmission and reception antennas. The leakage waves have an amplitude determined by such a mismatch and a degree of leakage, and a phase determined by the length of a path to the homodyne detector 24. Therefore, when the path length is sufficiently short, the phase of the waves can be regarded as being substantially constant, even when they are FMCW waves. As a result, the output detected by the homodyne detector 24 is substantially a direct current.

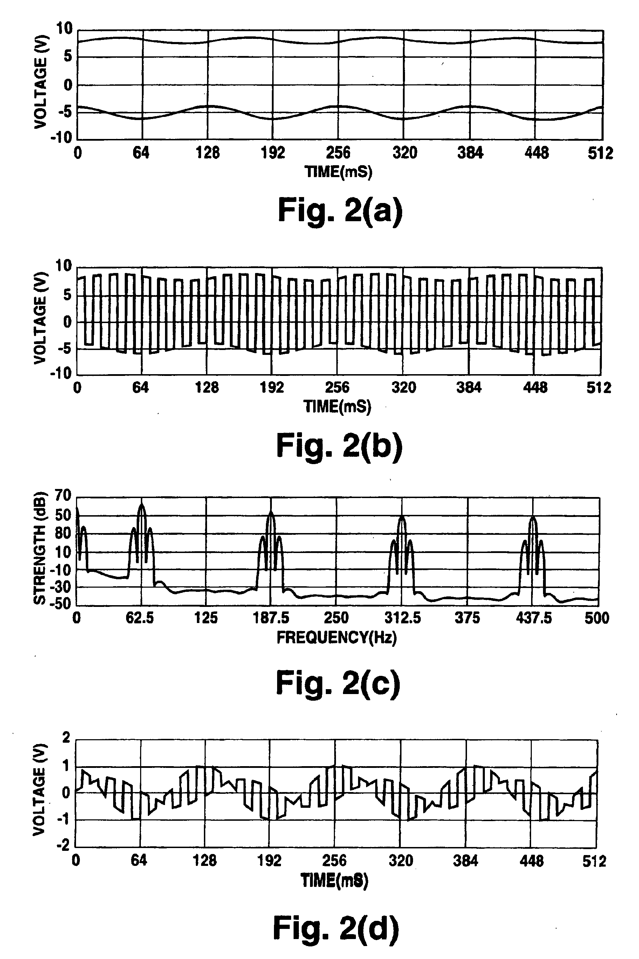

Fig. 2(a) shows an example of detected output signals obtained by superposing the leakage waves resulting from the two transmission antennas to the received signals when there is no switching by the switch 16. As shown, the direct-current value of the leakage component is usually greater than those of the signal components. When no switching is performed by the switch 16, a signal such as that shown in Fig. 2(a) is composed simply of a constant direct-current component and the signal component superposed thereon. Therefore, the direct-current component (direct leakage component) can easily be removed by disposing, for example, a decoupling capacitor in an output path from the homodyne detector 24. Effects of the direct leakage waves can thus be eliminated with simple means.

However, when high-speed switching is performed by the switch in a cycle of, for example, 16 msec, two waveforms alternate with each other, and the output is detected in such a state where two waveforms alternate as shown in Fig. 2(b). In such a case, the waveform of the detected output on which leakage component is superposed is not that of a simple direct-current component, and, accordingly, the leakage components cannot be removed by a simple method such as that described above.

The spectrum of the detected output of Fig. 2(b) is shown in Fig. 2(c). Peaks at the frequencies of 62.5 Hz, 187.5 Hz, 312.5 Hz, ... result from the leakage components, and the peak on either side thereof results from the received signal.

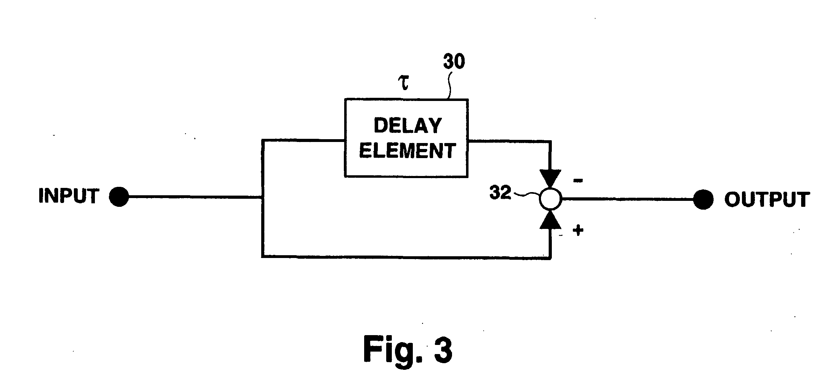

The principles of the comb filter 26 according to the present embodiment are illustrated in Fig. 3. An input signal is divided into two, and one of the divided signals is supplied to a delay element 30 having a delay time $\tau$. An output of the delay element 30 and the non-delayed input signal are provided to a subtractor 32 to obtain the difference between the two. The frequency transfer function can be expressed by the following equation:

$$G(j\omega) = 1-e[-j\omega\tau]$$

where $\tau$ is the delay time.

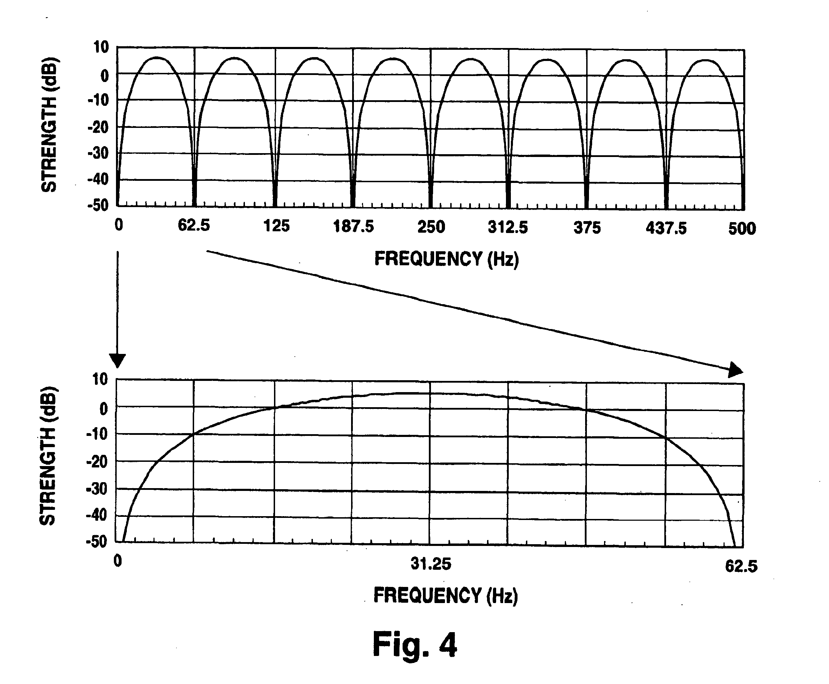

Fig. 4 shows frequency characteristics of the comb filter 26 of the subtraction type. As indicated, the comb filter 26 has a property that the gain becomes 0 at fixed frequency intervals. Therefore, in the case shown in Fig. 2(c), the component related to leakage components in the detected output can be removed by using a comb filter having a frequency interval of 62.5 Hz, i.e. a switching frequency expressed by the reciprocal of the switching cycle, 16 msec.

Fig. 2(d) shows the signal obtained after filtering the time change signal by the comb filter having the characteristics shown in Fig. 4. The leakage components are eliminated, and obtaining just the signals in an alternating state. Thus is made possible amplification of the detected output to a required level without being affected by the leakage component signals.

Because the intensity of the signal reflected from a target increases in inverse proportion to the fourth power of the distance in accordance with the radar equation, a wide dynamic range is required for the hardware to effectively detect both a nearby target (low frequency) and a distant target (high frequency). However, the gain of the subtraction type comb filter 26 decreases as a decrease in frequency as shown in the lower part of Fig. 4.

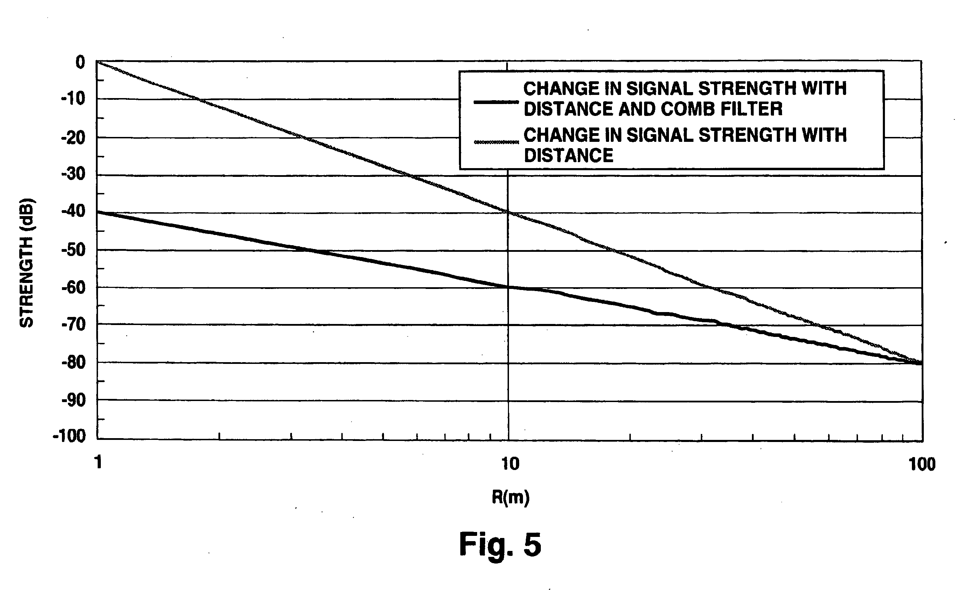

Fig. 5 shows, as a function of distance, a change in signal strength and a change in signal strength when the comb filter 26 of the subtraction type is applied.

It is apparent from the graph that the gain decreasing characteristics of the comb filter 26 in a low frequency area reduces the change depending on the fourth power of the distance to the change depending on the square of the distance. Thus, the comb filter 26 is proved not only to reduce the direct-current component resulting from leakage waves, but also to reduce the distance dependence of the signal strength.

This distance dependence will be further described. Referring again to Fig. 4, the comb filter 26 of the subtraction type has passing amplitude characteristics in the shape of 1-coskf, where k is a constant and f is a frequency. Consequently, as the signal frequency of waves reflected from the target in the detected output approaches 0, i.e. direct-current, the amplitude is attenuated. In the case of FMCW, on the other hand, the frequency of the signal from the target in the detected output is proportional to the distance. Therefore, when the distance is represented as R, the characteristics of the comb filter for the distance R can be expressed as 1-cos $\kappa$ R, where $\kappa$ is a constant.

As described above, the detected output is inversely proportional to the fourth power of the distance R if the comb filter 26 of the subtraction type is not provided, and the characteristics of the subtraction type comb filter 26 with respect to the distance is 1-cos $\kappa$ R. Thus, the characteristics of the detected output with respect to the distance when the comb filter 26 of the subtraction type is provided ([attenuation due to distance] · [comb filter]) can be expressed as follows when the value $\kappa$R is sufficiently small ($0 < \kappa R \ll 1$) and the value cos $\kappa$R is subjected to Taylor expansion:

$$\text{[Attenuation due to distance]} \cdot \text{[comb filter]}$$

$$= (1/R^4)(1-\cos \kappa R)$$

$$= (1/R^4)\{1-\{1-(\kappa R)^2/2! - (\kappa R)^4/4! \cdots\}\}$$

$$\fallingdotseq \kappa^2/2!R^2$$

It is apparent from the above expressions that the degree of attenuation of the detected output relative to distance is substantially in inverse proportion to the square of frequency when the comb filter 26 of the subtraction type is provided. Accordingly, the change in signal strength at a shorter distance can be suppressed to $1/R^2$.

Further, when there is a distant target which need not be detected, choosing the distance corresponding to the initial gain maximum frequency of the comb filter 26 as the maximum detection distance allows attenuation of a signal from the distant target located farther than that distance by the comb filter. Thus, the comb filter 26 also serves to suppress detection of a distant target which need not be detected.

When the comb filter 26 has such a characteristic as that shown in an upper stage of Fig. 4, choosing the distance corresponding to the frequency 31.25 Hz as the maximum detection distance enables to significantly attenuate a signal from a target located farther than the maximum detection distance.

While a plurality of transmission antennas and a single reception antenna are used in the above-described embodiment, an alternative configuration with a single transmission antenna and a plurality of reception antennas switched by means of a switch may also be employed.

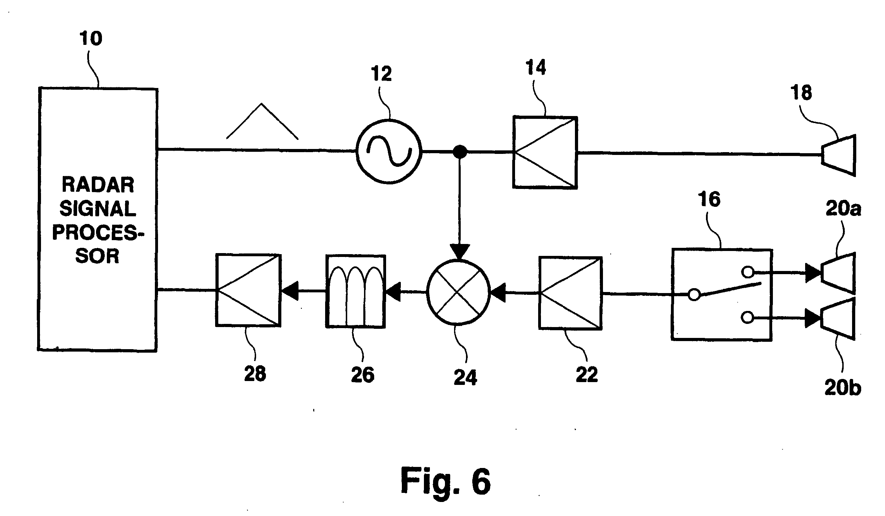

Such an alternative configuration is shown in Fig. 6. In this embodiment, a single transmission antenna 18 and two reception antennas 20a and 20b are provided, and a switch 16 is provided not between the transmission antenna 18 and a power amplifier 14 for transmission but between the reception antennas 20a, 20b and a low noise amplifier 22.

Therefore, FMCW waves are continuously transmitted from the single transmission antenna 18, and the reflected waves are received by the reception antennas 20a and 20b. By rapid switching operation of the switch 16, a received signal multiplexed in a time-divisional manner can be output from the switch 16. The time-multiplexed received signal is supplied through the low noise amplifier (LNA) 22 to a homodyne detector (MIX) 24, where FMCW waves from a VCO 12 are mixed to the received signal. Thus, outputs produced by detecting the signals received from the reception antennas 20a and 20b can alternately be obtained.

Still another configuration, wherein a plurality of transmission antennas and a plurality of reception antennas are provided and switched, is also possible, and even more than two transmission antennas and more than two reception antennas may be provided.

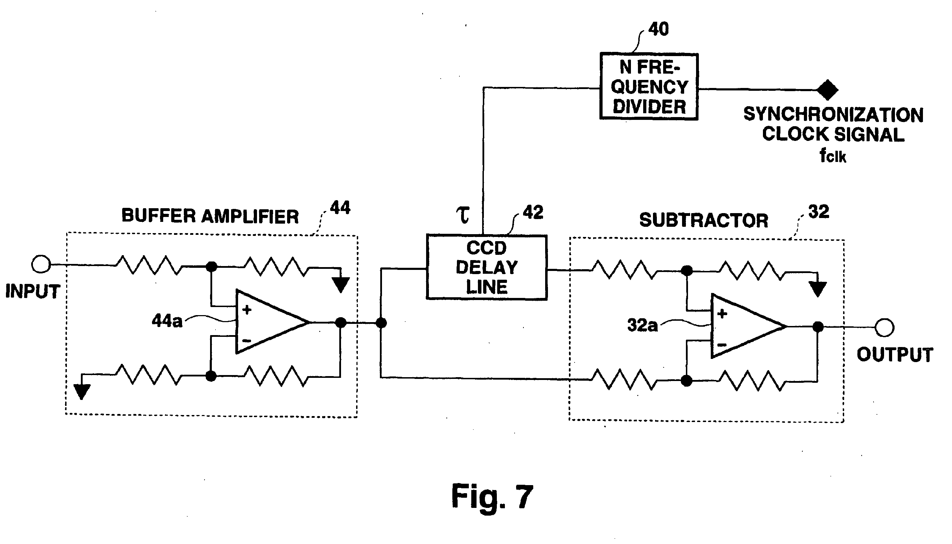

Fig. 7 shows an example configuration of the comb filter 26 shown in Fig. 3 in further detail. In this example, an analogue delay line of a CCD type which requires clock signals for operation is employed as the delay element 30. As the delay element 30 is of the CCD type that a delay time is determined in proportion to the cycle of an externally applied clock, the frequency of the clock synchronized with the antenna switching cycle is divided by a frequency divider so that the delay time of the delay element is equal to $\tau$ (the delay time required for the comb filter to have desired frequency characteristics).

More specifically, a synchronization clock signal fclk synchronized with the antenna switching cycle is input to an N frequency divider 40 for dividing the frequency of the signal by N and providing the resultant signal to a CCD delay line 42. The CCD delay line 42 transfers and outputs the input signal in accordance with the supplied clock. As a result, before being output, the signal output from the CCD delay line 42 is delayed by the time period $\tau$ in accordance with the supplied clock.

Meanwhile, the input signal is amplified by a buffer amplifier 44 so as to attain an appropriate input level for the CCD delay line 42. An output thereof is divided into two, one of which is applied through the delay line 42 and the other one is applied directly to the subtractor 32. The subtractor 32 produces and outputs a subtraction result of the two signals.

A signal from the homodyne detector mixer 24 is supplied to a positive input terminal of an operational amplifier 44a, and the buffer amplifier 44 amplifies the signal in accordance with the resistance of resistors provided in input and feedback paths. The above-described two signals are supplied to positive and negative input terminals of an operational amplifier 32a, and a difference between the two is output by the subtractor 32.

The comb filter 26 operating in synchronism with the antenna switching cycle can be implemented by the above-described configuration.

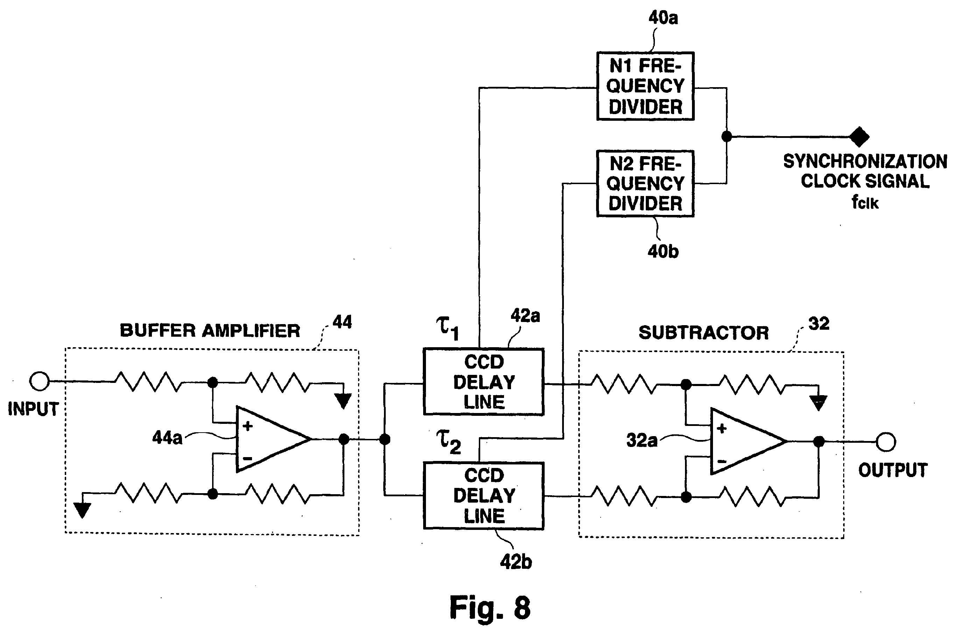

Fig. 8 shows another configuration example of the comb filter 26 having a CCD delay line as the configuration in Fig. 7. In this example, two CCD delay lines 42a and 42b are used, each delaying an input signal. Clock signals supplied to the CCD delay lines 42a and 42b are output from two frequency dividers 40a and 40b with different division ratios. Delay times produced by the two CCD delay lines 42a and 42b are represented as $\tau 1$ and $\tau 2$. By arranging the delay times $\tau 1$ and $\tau 2$ so that the relationship $\tau = \tau 1 - \tau 2$ is satisfied, the comb filter 26 operating in synchronism with the antenna switching cycle and having the frequency characteristics producing the time difference $\tau$ as a result of subtraction of signals can be implemented.

While a clock signal synchronized with the antenna switching cycle is used in the above-described two examples, such a clock signal synchronized with the antenna switching cycle is not necessarily required, and can be replaced with a clock signal from an independent clock oscillator if a highly accurate and stable oscillator, such as a crystal oscillator, can be used.

Although the CCD delay line 42 is used as a delay element in the above-described two embodiments, those of other types than the CCD type (such as a BBD type and a switched capacitor type) can alternatively be used. Further, a delay element formed by a passive circuit which does not require clock signals can also be used as long as the delay time $\tau$ produced thereby or by a difference between delay times of two elements can be maintained with high accuracy and stability.

As described above, leakage components modulated by switching can effectively be removed by using the comb filter.

INDUSTRIAL APPLICABILITY

The present invention is applicable to a radar device and the like mounted on automobiles and detecting an object located ahead thereof.

**Claims**

1. A radar device of a continuous-wave type for successively switching reception antennas or transmission antennas in a predetermined antenna switching cycle to implement an equivalent of multiple reception channels, wherein
a comb filter is disposed in a path of a received signal to remove an unwanted signal leaked from a transmitting section to a receiving section.

2. The device according to claim 1, wherein
said comb filter has a characteristic synchronized with said antenna switching cycle.

3. The device according to claim 2, wherein
said comb filter has a frequency characteristic such that a signal is attenuated to a predetermined level or less at multiples of a switching frequency expressed by the reciprocal of said antenna switching cycle.

4. The device according to any one of claims 1-3, wherein

said continuous-wave type is a frequency modulation type, and
said comb filter has a subtraction type configuration where a subtraction is performed on a signal input to the comb filter and a delayed version of said signal.

5. The device according to claim 4, wherein
said comb filter of the subtraction type has a first peak at a frequency corresponding to a maximum detection distance.

RADAR SIGNAL PROCES-SOR

Fig. 1

**Fig. 2(a)**

**Fig. 2(b)**

**Fig. 2(c)**

**Fig. 2(d)**

30

τ

**DELAY ELEMENT**

32 −

+

INPUT ● OUTPUT

## Fig. 3

Fig. 4

**Fig. 5**

EP 1 116 960 A1

Fig. 6

Fig. 7

EP 1 116 960 A1

**Fig. 8**

EP 1 116 960 A1

## INTERNATIONAL SEARCH REPORT

| International application No. |
|---|
| PCT/JP00/04891 |

### A. CLASSIFICATION OF SUBJECT MATTER
Int.Cl⁷   G01S 7/285
            G01S13/93
            H03H15/00

According to International Patent Classification (IPC) or to both national classification and IPC

### B. FIELDS SEARCHED

Minimum documentation searched (classification system followed by classification symbols)
Int.Cl⁷   G01S 7/00- 7/42, 13/00-13/95
            H03H15/00-15/02, 19/00-21/00

Documentation searched other than minimum documentation to the extent that such documents are included in the fields searched
Jitsuyo Shinan Koho      1922-1996    Toroku Jitsuyo Shinan Koho  1994-2000
Kokai Jitsuyo Shinan Koho   1971-2000    Jitsuyo Shinan Toroku Koho  1996-2000

Electronic data base consulted during the international search (name of data base and, where practicable, search terms used)
JICST FILE(JOIS),[(COMB)*RADAR] (in Japanese)
WPI(DIALOG),[ COMB(W)FILTER? AND RADAR ]
IEEE Xplore(IEEE),[ comb and radar ]

### C. DOCUMENTS CONSIDERED TO BE RELEVANT

| Category* | Citation of document, with indication, where appropriate, of the relevant passages | Relevant to claim No. |
|---|---|---|
| Y | JP, 7-218625, A (Japan Radio Co., Ltd.), 18 August, 1995 (18.08.95), Full text; all drawings | 1 |
| A | Full text; all drawings   (Family: none) | 2-5 |
| Y | JP, 9-33637, A (Denso Corporation), 07 February, 1997 (07.02.97), Full text; all drawings | 1 |
| A | Full text; all drawings   (Family: none) | 2-5 |
| A | JP, 60-165891, A (Matsushita Electric Ind. Co., Ltd.), 29 August, 1985 (29.08.85), Full text; all drawings & EP, 140716, A    & KR, 9004990, B & US, 4754340, A   & DE, 3484000, C | 1-5 |
| A | US, 4241347, A (International Telephone and Telegraph Corporation), 23 December, 1980 (23.12.80), Full text; all drawings & GB, 2024557, A   & DE, 2925576, A & FR, 2430021, A | 1 |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 August, 2000 (17.08.00) | 29 August, 2000 (29.08.00) |

| Name and mailing address of the ISA/ | Authorized officer |
|---|---|
| Japanese Patent Office | |
| Facsimile No. | Telephone No. |

Form PCT/ISA/210 (second sheet) (July 1992)

### INTERNATIONAL SEARCH REPORT

| International application No. |
| --- |
| PCT/JP00/04891 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP, 50-104892, A (Westinghouse Electric Corporation), 19 August, 1975 (19.08.75), Full text; all drawings & US, 3894219, A & NL, 7416772, A & FR, 2258057, A & DE, 2501201, A | 1-5 |

Form PCT/ISA/210 (continuation of second sheet) (July 1992)